# EUROPEAN PATENT SPECIFICATION

(11) **EP 3 647 038 B1**
(45) Date of publication and mention of the grant of the patent: **01.09.2021**
(21) Application number: 18204471.9
(22) Date of filing: 05.11.2018
(51) Int. Cl.: B29D 11/00, G02B 1/04, G02C 1/00, G02C 5/00, G02C 5/02, G02C 5/22, G02C 7/10, B29K 83/00

(54) **ONE-PIECE EYEWEAR ARTICLE**
EINTEILIGER BRILLENARTIKEL
ARTICLE DE LUNETTERIE MONOBLOC

(43) Date of publication of application: 06.05.2020
(73) Proprietor: Kruse, Torsten, Naples, FL 34114 (US)
(72) Inventor: Kruse, Torsten, Naples, FL 34114 (US)
(74) Representative: FRKelly

(56) References cited:
- EP-A1- 2 980 629
- WO-A1-00/75715
- WO-A1-2017/032770
- WO-A2-2005/022240
- US-A1- 2004 218 286
- Anonymous: "Silicone rubber - Wikipedia", , 10 March 2019 (2019-03-10), XP055570887, Retrieved from the Internet: URL:https://en.wikipedia.org/wiki/Silicone _rubber [retrieved on 2019-03-19]

## Description

### TECHNICAL FIELD

The technical field relates generally to the field of eyewear and, more specifically, relates to eyewear manufactured using novel processes and materials.

### BACKGROUND

Eyewear consists of items and accessories worn on or over the eyes, for fashion or adornment, protection against the environment, and to improve or enhance visual acuity. Common forms of eyewear include glasses (also called eyeglasses or spectacles), sunglasses, and the like. Eyewear can also include more utilitarian forms of eye protection, such as goggles. A standard eyewear article comprises two lenses and a frame, which includes two temples, two eye wires, the bridge and two hinges. The temples are the arms that are placed over a wearer's ears and the eye wires are the portion of the frame that hold the two lenses in place. The bridge connects the two eye wires together, and the hinges rotationally attach the eye wires to the temples.

One of the drawbacks associated with the conventional process for manufacturing eyewear is the large amount of manpower, tooling and fabrication involved. The conventional process for manufacturing eyewear typically involves the following. The temples are manufactured, often using an injection molding process or a metal stamping process. The eye wires and bridge are separately manufactured, also using an injection molding process or a metal stamping process. Then, the hinges are attached to the eye wires and temples, often using manpower, machining or some combination of the two. Lastly, the two lenses are attached to the eye wires, also often using manpower, machining or some combination of the two. Thus, there is a significant number and variation of steps involved in the conventional process for manufacturing eyewear. This can be costly, time consuming and tedious for manufacturers of eyewear.

Furthermore, conventional eyewear suffers certain drawbacks related to its constitution and its usage. Conventional eyewear is often made of standard, smooth plastic which has a tendency of slipping off a user's nose, especially when the user is sweating or has natural oils on his face. Also, conventional eyewear is known scratch and break easily, as it is typically made of plastic and glass. Further, conventional eyewear is not known to be highly resistant to heat or cold, which limits its usability among individuals who require eyewear in their occupations, such as welders.

Therefore, a need exists to overcome the problems with the prior art as discussed above, and particularly for improved eyewear and a more efficient way of manufacturing said improved eyewear.
Document EP 2 980 629 A1 discloses eyeglasses with built-in lenses and WO 00/75715 A1 discloses a one-piece plastic material spectacle frame. WO 2005/022240 A2 discloses safety glasses with a silicone frame and interchangeable lenses.

### SUMMARY

A one-piece, composite eyewear article is provided. This Summary is provided to introduce a selection of disclosed concepts in a simplified form that are further described below in the Detailed Description including the drawings provided. This Summary is not intended to identify key features or essential features of the claimed subject matter. Nor is this Summary intended to be used to limit the claimed subject matter's scope.

In one embodiment, an article is provided that solves the above-described problems. A one-piece, composite eyewear article includes an eyewear frame comprising of two temples, two eye wires, a bridge and two hinges, the entire frame composed of a single integral piece of cured liquid silicone rubber consisting of a liquid dimethyl polysiloxane polymer thermoset, a lens situated within the two eye wires and extending across the bridge, the lens composed of a single integral piece of optical grade cured liquid silicone rubber consisting of a liquid dimethyl polysiloxane polymer thermoset, and wherein the frame and lens are molded via a two-material molding process, such that the frame auto-adheres to the lens during curing.

In another embodiment, the one-piece, composite eyewear article is prepared by a process comprising the steps of: providing a mold having a first void defining an eyewear frame comprising of two temples, two eye wires, a bridge and two hinges, and a second void defining a lens situated within the two eye wires and extending across the bridge, injecting the first void in the mold with liquid silicone rubber consisting of a liquid dimethyl polysiloxane polymer thermoset, so as to produce said frame as a single integral piece, injecting the second void in the mold with optical grade liquid silicone rubber consisting of a liquid dimethyl polysiloxane polymer thermoset, so as to produce said lens as a single integral piece, allowing a predefined period of time to pass, wherein during said period of time, the frame auto-adheres to the lens during curing, and removing the one-piece, composite eyewear article from the mold.

### BRIEF DESCRIPTION OF THE DRAWINGS

The accompanying drawings, which are incorporated in and constitute a part of this disclosure, illustrate various example embodiments. In the drawings:
FIG. 1 depicts a front perspective view of a one-piece, composite eyewear article, according to an example embodiment;
FIG. 2 depicts a top perspective view of the one-piece, composite eyewear article, according to an example embodiment;
FIG. 3 depicts a front view of the one-piece, composite eyewear article, according to an example embodiment;
FIG. 4 depicts a left side view of the one-piece, composite eyewear article, according to an example embodiment;
FIG. 5 depicts a rear view of the one-piece, composite eyewear article, according to an example embodiment;
FIG. 6 depicts a top view of the one-piece, composite eyewear article, according to an example embodiment;
FIG. 7 depicts a bottom view of the one-piece, composite eyewear article, according to an example embodiment;
FIG. 8 depicts a cross sectional view of the bridge of the one-piece, composite eyewear article, according to an example embodiment;
FIG. 9 depicts a cross sectional view of an eye wire and lens of the one-piece, composite eyewear article, according to an example embodiment;
FIG. 10 depicts a cross sectional view of an eye wire and lens of the one-piece, composite eyewear article, according to an example embodiment
FIG. 11 depicts a top view of a hinge of the one-piece, composite eyewear article, according to an example embodiment.

### DETAILED DESCRIPTION

The following detailed description refers to the accompanying drawings. While embodiments of the claimed subject matter may be described, modifications, adaptations, and other implementations are possible. For example, substitutions, additions, or modifications may be made to the elements illustrated in the drawings, and the methods described herein may be modified by substituting, reordering, or adding stages to the disclosed methods. Accordingly, the following detailed description does not limit the claimed subject matter. Instead, the proper scope of the claimed subject matter is defined by the appended claims.

The claimed subject matter improves over the prior art by providing a one-piece, composite eyewear article that is manufactured using a reduced number of passes in the manufacturing process. The claimed subject matter presents an inexpensively manufactured article that provide high quality eye protection, resists impact and can be immersed in water. The claimed subject matter accomplishes the objectives of conventional eyewear while also reducing manufacturing costs and providing utility to the consumer. Additionally, the material of the claimed subject matter reduces slipping of the eyewear off a user's nose, especially when the user is sweating or has natural oils on his face, and reduces or eliminates scratching and breaking of the frame and lens(es). Further, the material of the claimed subject matter is highly resistant to heat and cold, which increases usability among individuals who require eyewear in their occupations, such as welders and athletes.

Eyewear or eyeglasses are worn on or over the eyes, for fashion or adornment, protection against the environment, and to improve or enhance visual acuity. Eyewear consists of lenses mounted in a frame that holds them in front of a person's eyes, using a bridge over the nose and temples or arms which rest over the ears. Eyewear is typically used for vision correction, such as with reading glasses and glasses used for nearsightedness, for safety in providing eye protection against flying debris or radiation, for glare or bright daylight, for high levels of ultraviolet light, for viewing specific visual information (such as stereoscopy) or three-dimensional movies, or simply for aesthetic or fashion purposes.

Many eyewear articles include one or more of the following known elements: two eye wires or rims surrounding and holding the lenses in place, a bridge which connects the two eye wires, a top bar or brow bar (a bar just above the bridge providing structural support and/or style enhancement), brows or caps (plastic or metal caps which fit over the top of the eye wire for style enhancement and to provide additional support for the lenses), two nose pads that allow a comfortable resting of the eye wires on the nose, two pad arms which connect the eye wire to the nose pads, two end pieces which connect the eye wire via the hinges to the temples, two hinges connecting the end pieces to the temples and allowing a swivel movement, two temples (or earpieces) on either side of the skull, and two temple tips at the end of each temple.

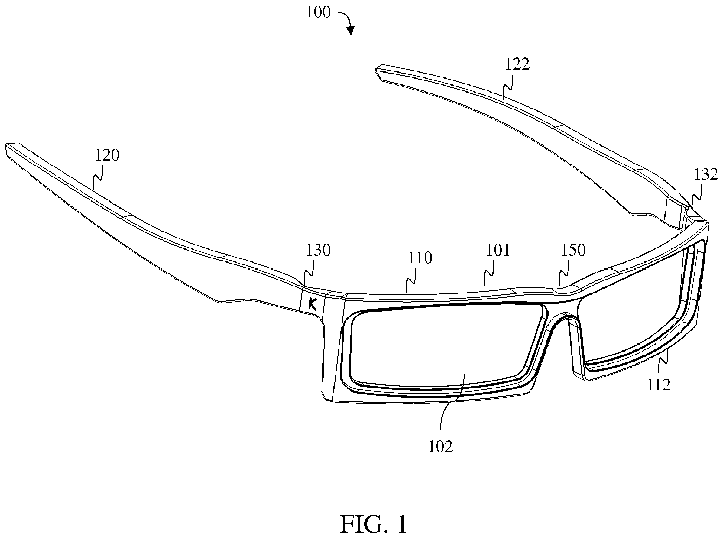

FIG. 1 depicts a front perspective view of a one-piece, composite eyewear article 100, according to an example embodiment. FIG. 1 shows that the one-piece, composite eyewear article 100 includes a frame 101 comprising of temples 120, 122, eye wires 110, 112, bridge 150 and hinges 130, 132, the frame 101 composed of cured liquid silicone rubber consisting of a liquid dimethyl polysiloxane polymer thermoset. Liquid silicone rubber is a high purity platinum cured silicone with low compression set, high stability and ability to resist extreme temperatures of heat and cold, ideally suitable for production of parts, where high quality is desired.

FIG. 1 shows that the one-piece, composite eyewear article 100 includes a lens 102 located within the eye wires110, 112, the lens composed of optical grade cured liquid silicone rubber consisting of a liquid dimethyl polysiloxane polymer thermoset. Optical-grade silicones offer high temperature resistance along with optical clarity. Optical liquid silicone rubber does not discolor or lose transparency with age or with exposure to heat or UV light; it is significantly lighter than glass and most other plastics; and it is scratch and crack resistant, among many other advantages.

FIG. 1 shows that the right temple 120 is attached via right hinge 130 to the right eye wire 110, and the right eye wire is connected via bridge 150 to the left eye wire 112, which is further connected via left hinge 132 to the left temple 122. Each temple may bend down behind the ears, follow the contour of the skull and rest evenly against the skull. Each eye wire is shown to be a roughly rectangular shaped frame into which a lens or lens portion is inserted.

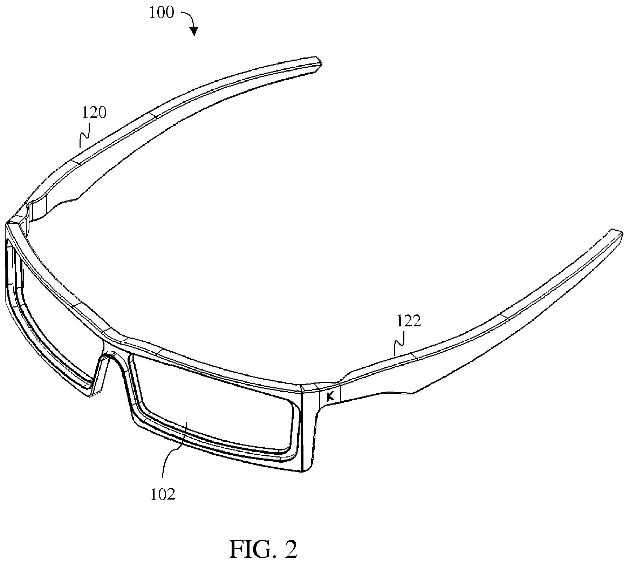

FIG. 2 depicts a top perspective view of the one-piece, composite eyewear article 100, according to an example embodiment. FIG. 2 shows a better view of the contours of the left temple 122 and the top side of the left eye wire 112.

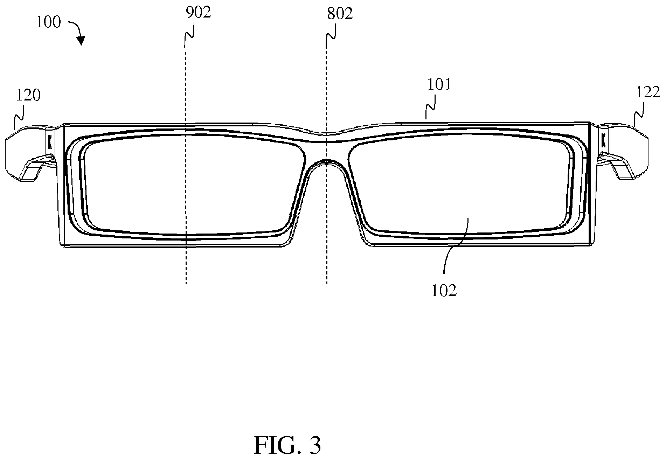

FIG. 3 depicts a front view of the one-piece, composite eyewear article 100, according to an example embodiment. FIG. 3 shows the location of the vertical cross section 802 taken on a plane perpendicular to the view of FIG. 3 and through the bridge 150. FIG. 3 also shows the location of the vertical cross section 902 taken on a plane perpendicular to the view of FIG. 3 and through the right eye wire 110.

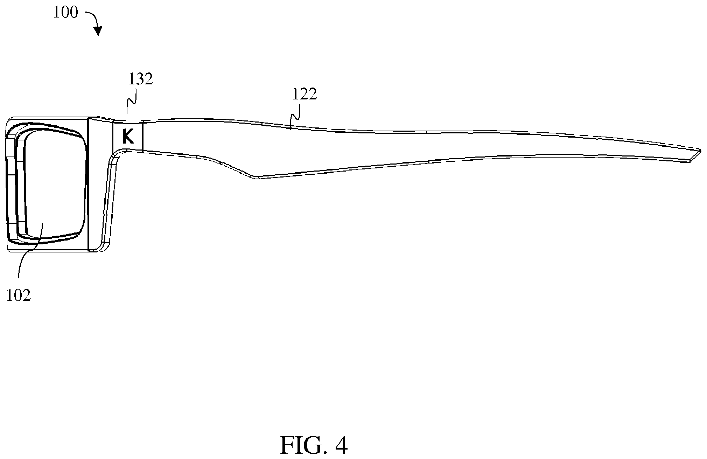

FIG. 4 depicts a left side view of the one-piece, composite eyewear article 100, according to an example embodiment. FIG. 4 shows a better view of the contours of the left temple 122 and the curved nature of the left eye wire 112.

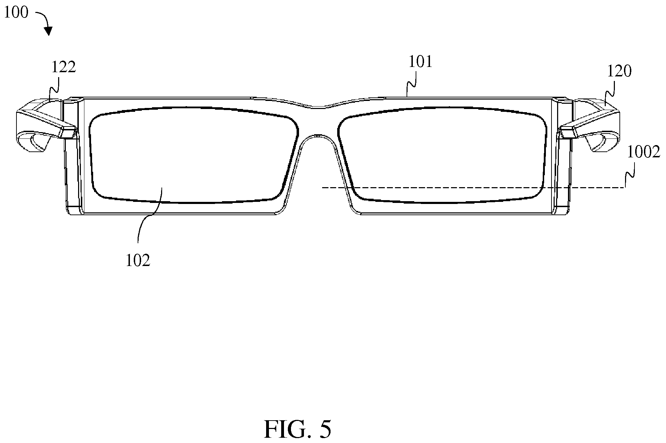

FIG. 5 depicts a rear view of the one-piece, composite eyewear article 100, according to an example embodiment. FIG. 5 shows the location of the horizontal cross section 1002 802 taken on a plane perpendicular to the view of FIG. 5 and through the right eye wire 110.

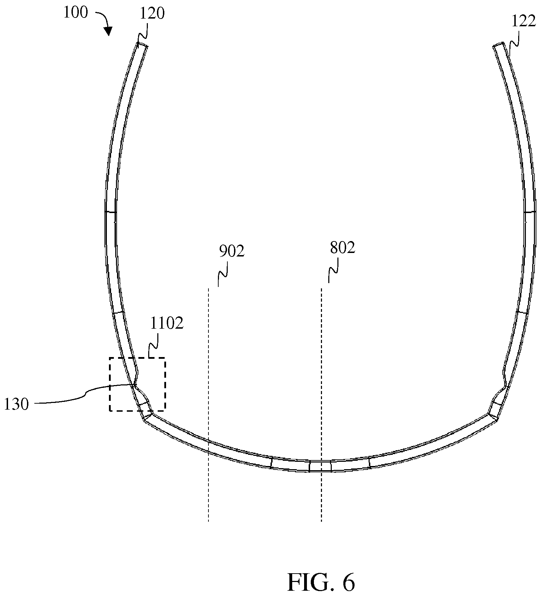

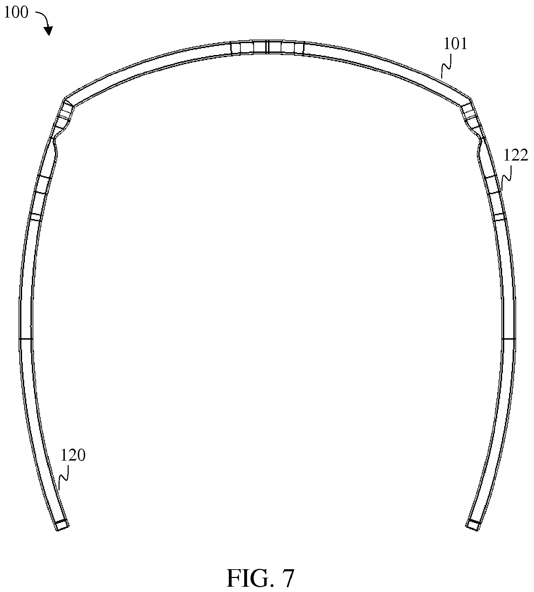

FIG. 6 depicts a top view of the one-piece, composite eyewear article 100, according to an example embodiment. FIG. 6 shows the location of the vertical cross section 802 taken on a plane perpendicular to the view of FIG. 6 and through the bridge 150. FIG. 6 also shows the location of the vertical cross section 902 taken on a plane perpendicular to the view of FIG. 6 and through the right eye wire 110. FIG. 6 further shows the close-up 1102 taken of the left hinge 130. FIG. 7 depicts a bottom view of the one-piece, composite eyewear article, according to an example embodiment.

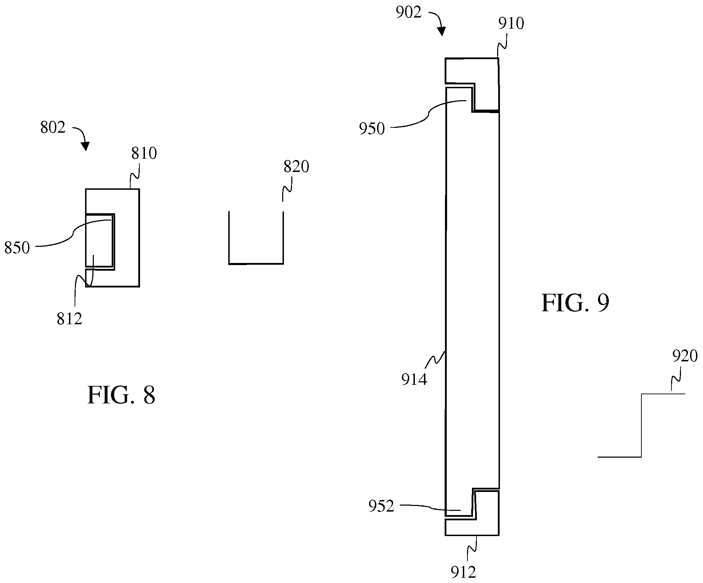

FIG. 8 depicts a cross sectional view 802 of the bridge 150 of the one-piece, composite eyewear article 100, according to an example embodiment. FIG. 8 shows that the cross section 802 depicts an approximate U-shaped element 810 representing the bridge 150, which includes a groove, gutter or canal 850, into which the lens 102 is located. The U-shape is depicted in shape 820. A cross section of the lens 102 is shown as an approximate rectangular shape 812.

FIG. 9 depicts a cross sectional view 902 of eye wire 110 and lens 102 of the one-piece, composite eyewear article 100, according to an example embodiment. FIG. 9 shows that the cross section 902 of the eye wire 110 is shown as two approximate L-shaped elements 910 and 912, wherein 910 is the top of eye wire 110 and 912 is the bottom of eye wire 110. Cross section 902 depicts an approximate step shaped element 950 representing the interior surface of the eye wire 110 at the top and bottom elements 910 and 912, into which the lens 102 is located. The step shape is depicted in shape 920, and comprises a vertical line connected at a top end to a first horizontal line that extends to the right, and the vertical line connected at a bottom end to a second horizontal line that extends to the left. A cross section of the lens 102 is shown as having a step shape at the top end 950 (which matches the step shape 920 of the top part 910 of the eye wire 110) and having a step shape at the bottom end 952 (which matches the step shape 920 of the bottom part 912 of the eye wire 110).

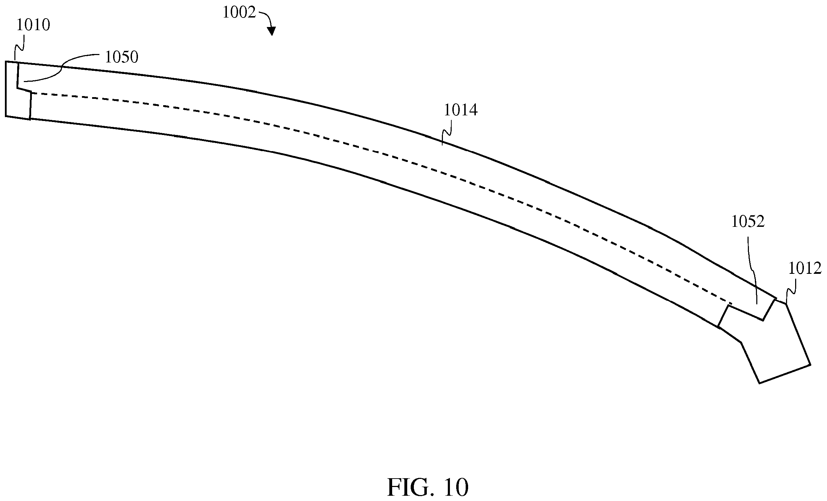

FIG. 10 depicts a cross sectional view 1002 of right eye wire 110 and lens 102 of the one-piece, composite eyewear article 100, according to an example embodiment. FIG. 10 shows that the cross section 1002 of the eye wire 110 is shown as two approximate L-shaped elements 1010 and 1012, wherein 1010 is the interior or proximal part of eye wire 110 and 1012 is the exterior or distal part of eye wire 110. Cross section 1002 depicts an approximate step shaped element representing the interior surface of the eye wire 110 at the proximal and distal elements 1010 and 1012, into which the lens 102 is located. A cross section of the lens 102 is shown as having a step shape at the proximal end 1050 (which matches the step shape of the proximal part 1010 of the eye wire 110) and having a step shape at the distal end 1052 (which matches the step shape of the distal part 1012 of the eye wire 110).

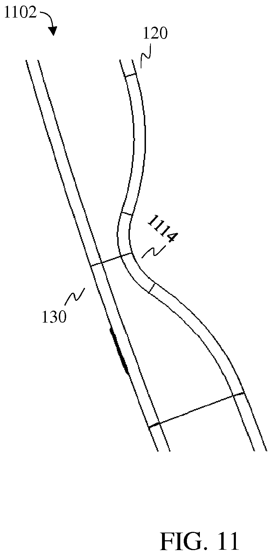

FIG. 11 depicts a close-up 1102 of a top view taken of the right hinge 130 of the one-piece, composite eyewear article 100, according to an example embodiment. FIG. 11 shows that the right temple 120 has a uniform thickness that, as it approaches hinge 130, includes a détente or depression 114, which acts as a pivot point about which the temple 120 rotates.

The frame 101 and the lens 102 may be molded via a two-material molding process, such that the frame and the lens auto-adhere to each other during curing. Two material multi-material injection molding is the process of molding two or more different materials into one part at one time. As is the case in traditional injection molding, multi material injection molding uses materials that are at or near their melting point so that the semi-liquidous (viscous) material can fill voids and cavities within a pre-machined mold, thus taking on the desired shape of designed tooling. In general, advantages of multi-material injection molding over other production techniques include, but are not limited to, creating parts that have an elastic modulus that varies with location on the part (different regional polymer hardness), creating a single-structure part with different regional materials (similar to the previous advantage, but more focused on joining different types of polymers like rubber and plastic), and also creating a single part with multiple independent polymer colors. Injection molding of liquid silicone rubber is a process to produce pliable, durable parts.

Alternative to the two-material molding process, an insert over molding process may be used. Insert molding involves molding material around a core or "insert". The insert in this case may be the frame, around which the lenses are molded. Insert molding is often used to join the insert and secondary material together more securely than assembly allows. Moreover, it often eliminates post-molding assembly and saves the additional cost incurred in a secondary operation.

In one embodiment, any of the components of the one-piece, composite eyewear article described above may comprise other materials, such as any thermoset elastomer, any plastic, polyethylene, PVC, or the like. In another embodiment, the frame 101 and/or lens 102 is tinted with any one of: carbon nano tint, soluble organic dye and metallic oxide pigments.

In one embodiment, the entire frame 101 is composed of a single integral piece of cured liquid silicone rubber consisting of a liquid dimethyl polysiloxane polymer thermoset. Similarly, in one embodiment, the entire lens 102 is composed of a single integral piece of optical grade cured liquid silicone rubber consisting of a liquid dimethyl polysiloxane polymer thermoset. The term "single, integral piece" refers to one piece or part that is formed of a continuous volume of a polymer material that is injected all at once, and that cures all at once.

The one-piece, composite eyewear article 100 may be prepared by a process comprising the steps of providing a mold having a first void defining an eyewear frame 101 comprising of two temples 120, 122, two eye wires 110, 112, a bridge 150 and two hinges 130, 132, and a second void defining a lens 102 situated within the two eye wires and extending across the bridge. The process continues by injecting the first void in the mold with liquid silicone rubber consisting of a liquid dimethyl polysiloxane polymer thermoset, so as to produce said frame as a single integral piece and injecting the second void in the mold with optical grade liquid silicone rubber consisting of a liquid dimethyl polysiloxane polymer thermoset, so as to produce said lens as a single integral piece. The process continues by allowing a predefined period of time to pass, wherein during said period of time, the frame auto-adheres to the lens during curing; and removing the one-piece, composite eyewear article from the mold.

Embodiments may be described above with reference to functions or acts, which comprise methods. The functions/acts noted above may occur out of the order as shown or described. For example, two functions/acts shown or described in succession may in fact be executed substantially concurrently or the functions/acts may sometimes be executed in the reverse order, depending upon the functionality/acts involved. While certain embodiments have been described, other embodiments may exist.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A one-piece, composite eyewear article, the article comprising:
a) an eyewear frame comprising of two temples, two eye wires, a bridge and two hinges, the entire frame composed of a single integral piece of cured liquid silicone rubber consisting of a liquid dimethyl polysiloxane polymer thermoset;
b) one lens situated within the two eye wires and extending across the bridge, the lens composed of a single integral piece of optical grade cured liquid silicone rubber consisting of a liquid dimethyl polysiloxane polymer thermoset; and
c) wherein the frame and lens are molded via a two-material molding process, such that the frame auto-adheres to the lens during curing.

2. The one-piece, composite eyewear article of claim 1 wherein a first temple of the two temples is coupled with the first eye wire of the two eye wires via a first hinge of the two hinges, a second temple of the two temples is coupled with a second eye wire of the two eye wires via a second hinge of the two hinges, and the first eye wire is coupled with the second eye wire via the bridge.

3. The one-piece, composite eyewear article of any of the preceding claims wherein an interior circumference of the first and second eye wires comprises a step shape.

4. The one-piece, composite eyewear article of claim 1, wherein a first portion of the lens is situated within, and contacts, the entire step shape of the interior circumference of the first and second eye wires.

5. The one-piece, composite eyewear article of claim 4, wherein the first portion of the lens auto-adheres to the entire step shape of the interior circumference of the first and second eye wires.

6. The one-piece, composite eyewear article of claim 5, wherein the bridge comprises a forward-facing groove extending from the first eye wire to the second eye wire.

7. The one-piece, composite eyewear article of claim 6, wherein a second portion of the lens is situated within, and contacts, the groove of the bridge.

8. The one-piece, composite eyewear article of claim 7, wherein the second portion of the lens auto-adheres to the groove of the bridge.

9. The one-piece, composite eyewear article of any of the preceding claims, wherein the first hinge comprises a first détente in the first temple and the second hinge comprises a second détente in the second temple.

10. The one-piece, composite eyewear article of claim 9, wherein the first détente is configured to allow the first temple to rotate about the first hinge, and wherein the second détente is configured to allow the second temple to rotate about the second hinge.

11. The one-piece, composite eyewear article of any of the preceding claims, wherein the frame is tinted with any one of: carbon nano tint, soluble organic dye and metallic oxide pigments.

12. The one-piece, composite eyewear article of any of the preceding claims, wherein the lens is tinted with any one of: carbon nano tint, soluble organic dye and metallic oxide pigments.

13. A process for the preparation of a one-piece, composite eyewear article as claimed in any of the preceding claims, the article process comprising the steps of:
a) providing a mold having a first void defining an eyewear frame comprising of two temples, two eye wires, a bridge and two hinges, and a second void defining a lens situated within the two eye wires and extending across the bridge;
b) injecting the first void in the mold with liquid silicone rubber consisting of a liquid dimethyl polysiloxane polymer thermoset, so as to produce said frame as a single integral piece;
c) injecting the second void in the mold with optical grade liquid silicone rubber consisting of a liquid dimethyl polysiloxane polymer thermoset, so as to produce said lens as a single integral piece;
d) allowing a predefined period of time to pass, wherein during said period of time, the frame auto-adheres to the lens during curing; and
e) removing the one-piece, composite eyewear article from the mold.

## Patentansprüche

1. Einteiliger Verbundbrillenartikel, wobei der Artikel Folgendes umfasst:
a) einen Brillenrahmen, der zwei Bügel, zwei Brillenränder, eine Brücke und zwei Bügelscharniere umfasst, wobei der gesamte Rahmen aus einem einstückigen Einzelteil aus gehärtetem Flüssigsilikonkautschuk bestehend aus einem Polymer-Duroplast aus flüssigem Dimethylpolysiloxan zusammengesetzt ist;
b) eine Linse, die sich innerhalb der zwei Brillenränder befindet und sich über die Brücke hinweg erstreckt, wobei die Linse aus einem einstückigen Einzelteil aus gehärtetem Flüssigsilikonkautschuk optischer Güte bestehend aus einem Polymer-Duroplast aus flüssigem Dimethylpolysiloxan zusammengesetzt ist; und
c) wobei der Rahmen und die Linse über ein Formgebungsverfahren mit zwei Materialien geformt sind, sodass der Rahmen während des Aushärtens selbst an der Linse haftet.

2. Einteiliger Verbundbrillenartikel nach Anspruch 1, wobei der erste Bügel der zwei Bügel über ein erstes Bügelscharnier der zwei Bügelscharniere an den ersten Brillenrand der zwei Brillenränder gekoppelt ist, ein zweiter Bügel der zwei Bügel über ein zweites Bügelscharnier der zwei Bügelscharniere an einen zweiten Brillenrand der zwei Brillenränder gekoppelt ist und der erste Brillenrand über die Brücke an den zweiten Brillenrand gekoppelt ist.

3. Einteiliger Verbundbrillenartikel nach einem der vorhergehenden Ansprüche, wobei ein Innenumfang des ersten und zweiten Brillenrands eine Stufenform umfasst.

4. Einteiliger Verbundbrillenartikel nach Anspruch 1, wobei sich ein erster Abschnitt der Linse innerhalb der gesamten Stufenform des Innenumfangs des ersten und zweiten Brillenrands befindet und diese kontaktiert.

5. Einteiliger Verbundbrillenartikel nach Anspruch 4, wobei der erste Abschnitt der Linse selbst an der gesamten Stufenform des Innenumfangs des ersten und zweiten Brillenrands haftet.

6. Einteiliger Verbundbrillenartikel nach Anspruch 5, wobei die Brücke eine nach vorne gerichtete Nut umfasst, die sich von dem ersten Brillenrand zu dem zweiten Brillenrand erstreckt.

7. Einteiliger Verbundbrillenartikel nach Anspruch 6, wobei sich ein zweiter Abschnitt der Linse innerhalb der Nut der Brücke befindet und diese kontaktiert.

8. Einteiliger Verbundbrillenartikel nach Anspruch 7, wobei der zweite Abschnitt der Linse selbst an der Nut der Brücke haftet.

9. Einteiliger Verbundbrillenartikel nach einem der vorhergehenden Ansprüche, wobei das erste Bügelscharnier eine erste Vertiefung in dem ersten Bügel umfasst und das zweite Bügelscharnier eine zweite Vertiefung in dem zweiten Bügel umfasst.

10. Einteiliger Verbundbrillenartikel nach Anspruch 9, wobei die erste Vertiefung dazu konfiguriert ist, ein Drehen des ersten Bügels um das erste Bügelscharnier zu ermöglichen, und wobei die zweite Vertiefung dazu konfiguriert ist, ein Drehen des zweiten Bügels um das zweite Bügelscharnier zu ermöglichen.

11. Einteiliger Verbundbrillenartikel nach einem der vorhergehenden Ansprüche, wobei der Rahmen mit einem der Folgenden eingefärbt ist: Kohlenstoff-Nanotönung, löslicher organischer Farbstoff und Metalloxidpigmente.

12. Einteiliger Verbundbrillenartikel nach einem der vorhergehenden Ansprüche, wobei die Linse mit einem der Folgenden eingefärbt ist: Kohlenstoff-Nanotönung, löslicher organischer Farbstoff und Metalloxidpigmente.

13. Verfahren zur Herstellung eines einteiligen Verbundbrillenartikels nach einem der vorhergehenden Ansprüche, wobei das Artikelverfahren die folgenden Schritte umfasst:
a) Bereitstellen einer ersten Gussform mit einem ersten Hohlraum, der einen Brillenrahmen umfassend zwei Brillenbügel, zwei Brillenränder, eine Brücke und zwei Bügelscharniere definiert, und einem zweiten Hohlraum, der eine Linse definiert, die sich innerhalb der zwei Brillenränder befindet und sich über die Brücke hinweg erstreckt;
b) Einspritzen des Flüssigsilikonkautschuks bestehend aus einem Polymer-Duroplast aus flüssigem Dimethylpolysiloxan in den ersten Hohlraum in der Gussform, um den Rahmen als ein einstückiges Einzelteil herzustellen;
c) Einspritzen des Flüssigsilikonkautschuks optischer Güte bestehend aus einem Polymer-Duroplast aus flüssigem Dimethylpolysiloxan in den zweiten Hohlraum in der Gussform, um die Linse als ein einstückiges Einzelteil herzustellen;
d) Verstreichenlassen eines vordefinierten Zeitraums, wobei der Rahmen während des Zeitraums beim Aushärten selbst an der Linse haftet; und
e) Entfernen des einstückigen Verbundbrillenartikels aus der Gussform.

## Revendications

1. Article de lunetterie composite monobloc, l'article comprenant :
a) une monture de lunettes comprenant deux branches, deux cercles, un pont et deux charnières, la totalité de la monture étant composée d'une unique pièce d'un seul tenant de caoutchouc de silicone liquide solidifié constitué d'un polymère de diméthylpolysiloxane liquide thermodurci ;
b) un verre situé à l'intérieur des deux cercles et s'étendant de part et d'autre du pont, le verre étant composé d'une unique pièce d'un seul tenant de caoutchouc de silicone liquide solidifié de qualité optique constitué d'un polymère de diméthylpolysiloxane liquide thermodurci ; et
c) dans lequel la monture et le verre sont moulés via un processus de moulage bi-matière, de sorte que la monture auto-adhère au verre pendant la solidification.

2. Article de lunetterie composite monobloc selon la revendication 1 dans lequel une première branche parmi les deux branches est couplée au premier cercle parmi les deux cercles via une première charnière parmi les deux charnières, une seconde branche parmi les deux branches est couplée à un second cercle parmi les deux cercles via une seconde charnière parmi les deux charnières, et le premier cercle est couplé au second cercle via le pont.

3. Article de lunetterie composite monobloc selon l'une quelconque des revendications précédentes dans lequel une circonférence intérieure des premier et second cercles comprend une géométrie à gradin.

4. Article de lunetterie composite monobloc selon la revendication 1, dans lequel une première partie du verre est située à l'intérieur de, et est en contact avec, la totalité de la géométrie à gradin de la circonférence intérieure des premier et second cercles.

5. Article de lunetterie composite monobloc selon la revendication 4, dans lequel la première partie du verre auto-adhère à la totalité de la géométrie à gradin de la circonférence intérieure des premier et second cercles.

6. Article de lunetterie composite monobloc selon la revendication 5, dans lequel le pont comprend une rainure faisant face vers l'avant s'étendant du premier cercle au second cercle.

7. Article de lunetterie composite monobloc selon la revendication 6, dans lequel une seconde partie du verre est située à l'intérieur de, et est en contact avec, la rainure du pont.

8. Article de lunetterie composite monobloc selon la revendication 7, dans lequel la seconde partie du verre auto-adhère à la rainure du pont.

9. Article de lunetterie composite monobloc selon l'une quelconque des revendications précédentes, dans lequel la première charnière comprend une première détente dans la première branche et la seconde charnière comprend une seconde détente dans la seconde branche.

10. Article de lunetterie composite monobloc selon la revendication 9, dans lequel la première détente est configurée pour permettre à la première branche de tourner autour de la première charnière, et dans lequel la seconde détente est configurée pour permettre à la seconde branche de tourner autour de la seconde charnière.

11. Article de lunetterie composite monobloc selon l'une quelconque des revendications précédentes, dans lequel la monture est teintée avec l'un quelconque parmi : une teinte au nano-carbone, un colorant organique soluble et des pigments d'oxyde métallique.

12. Article de lunetterie composite monobloc selon l'une quelconque des revendications précédentes, dans lequel le verre est teinté avec l'un quelconque parmi : une teinte au nano-carbone, un colorant organique soluble et des pigments d'oxyde métallique.

13. Processus pour la préparation d'un article de lunetterie composite monobloc selon l'une quelconque des revendications précédentes, le processus pour l'article comprenant les étapes de :
a) la fourniture d'un moule ayant un premier vide définissant une monture de lunettes comprenant deux branches, deux cercles, un pont et deux charnières, et un second vide définissant un verre situé à l'intérieur des deux cercles et s'étendant de part et d'autre du pont ;
b) l'injection, dans le premier vide dans le moule, de caoutchouc de silicone liquide constitué d'un polymère de diméthylpolysiloxane liquide thermodurci, de façon à produire ladite monture sous la forme d'une unique pièce d'un seul tenant ;
c) l'injection, dans le second vide dans le moule, de caoutchouc de silicone liquide de qualité optique constitué d'un polymère de diméthylpolysiloxane liquide thermodurci, de façon à produire ledit verre sous la forme d'une unique pièce d'un seul tenant ;
d) le fait de laisser une durée prédéfinie s'écouler, dans lequel pendant ladite durée, la monture auto-adhère au verre pendant la solidification ; et
e) le retrait de l'article de lunetterie composite monobloc du moule.
